# EUROPÄISCHE PATENTSCHRIFT

(11) **EP 1 558 420 B1**
(45) Veröffentlichungstag und Bekanntmachung des Hinweises auf die Patenterteilung: **18.10.2006**
(21) Anmeldenummer: 03769022.9
(22) Anmeldetag: 31.10.2003
(51) Int. Cl.: B23K 9/32

(54) **VERFAHREN UND VORRICHTUNG ZUM REINIGEN VON SCHWEISSBRENNERN**
METHOD AND DEVICE FOR CLEANING WELDING TORCHES
PROCEDE ET DISPOSITIF DE NETTOYAGE DE CHALUMEAUX DE SOUDAGE

(30) Priorität: 31.10.2002 DE 20216788 U
(43) Veröffentlichungstag der Anmeldung: 03.08.2005
(73) Patentinhaber: Fronius International GmbH, 4643 Pettenbach (AT)
(72) Erfinder: LANGEDER, Harald, A-4643 Pettenbach (AT); FRIEDL, Helmut, A-4621 Sipbachzell (AT); EGELSEDER, Erich, A-4560 Kirchdorf/Krems (AT); BINDER, Georg, A-4643 Pettenbach (AT)
(74) Vertreter: Sonn & Partner Patentanwälte
(86) Internationale Anmeldenummer: PCT/AT2003/000326
(87) Internationale Veröffentlichungsnummer: WO 2004/039528

(56) Entgegenhaltungen:
- DE-A- 3 816 912
- US-A- 4 733 050

## Beschreibung

Die Erfindung betrifft ein Verfahren zum Reinigen von Schweißbrennern, wobei auf die Spitze des Schweißbrenners Reinigungsflüssigkeit bzw. Benetzungsflüssigkeit aufgebracht wird und anschließend die Spitze des Schweißbrenners zur berührungslosen Entfernung von Verunreinigungen einem elektromagnetischen Feld ausgesetzt wird.

Weiters betrifft die Erfindung eine Vorrichtung zum Reinigen von Schweißbrennern mit einer Vorrichtung zum Aufbringen von Reinigungsflüssigkeit an die Spitze des Schweißbrenners und einer Spule mit einer Öffnung zur Einbringung des Schweißbrenners zur elektromagnetischen Reinigung desselben und mit einer mit der Spule verbundenen elektrischen Versorgungseinrichtung.

Schweißbrenner werden während des Schweißvorganges durch Spritzer geschmolzenen Metalls verunreinigt. Dabei lagern sich die Metallspritzer auch innerhalb der Gasdüse des Schweißbrenners ab und erstarren dort. In der Folge wird die Strömung des Schutzgases durch die Gasdüse durch die abgelagerten Metallspritzer gestört, so dass auch atmosphärische Luft an die Schweißstelle gelangen kann und somit den Schweißprozess negativ beeinflussen kann. Für eine qualitativ hochwertige Schweißstelle ist daher ein einwandfrei funktionierender und möglichst sauberer Schweißbrenner wichtig.

Schweißbrenner werden daher in regelmäßigen Abständen von den darauf befindlichen Metallspritzern gereinigt. Während der Reinigungszeit steht der Schweißbrenner für Schweißarbeiten nicht zur Verfügung. Daher wird angestrebt, die Reinigung möglichst rasch durchzuführen. Es existieren mechanische Verfahren zur Reinigung von Schweißbrennern, bei welchen mit Hilfe von Bürsten, Messern oder dgl. die Ablagerungen von der Spitze des Schweißbrenners entfernt werden. Mit derartigen mechanischen Reinigungsverfahren ist es jedoch nur begrenzt möglich, das Innere der Gasdüse des Schweißbrenners möglichst gut zu reinigen. Darüber hinaus werden die Bestandteile des Schweißbrenners durch die mechanischen Einwirkungen beschädigt und in der Folge deren Lebensdauer verkürzt. Durch die Beschädigungen an der Oberfläche der Teile des Schweißbrenners haften die Schweißspritzer noch besser an, so dass ein rascheres Verlegen der Gasdüse die Folge ist und der Schweißbrenner somit öfters gereinigt werden muss. Weiters sollte der Schweißbrenner vor dem Reinigungsvorgang abgekühlt werden, was die Reinigungszeit wiederum erhöht.

Die US 4 838 287 A beschreibt ein Verfahren zur Reinigung von Schweißbrennern, welches unter Verwendung einer mit elektrischem Strom durchflossenen Spule eine berührungslose Reinigung des Schweißbrenners ermöglicht. Zu diesem Zweck wird die Spitze des Schweißbrenners in die Öffnung der Spule eingebracht und ein entsprechender Stromimpuls angelegt. Das resultierende elektromagnetische Feld bewirkt entsprechende magnetische Kräfte, die auch auf die Ablagerungen am Schweißbrenner wirken und diese somit entfernen. Dabei erfolgt die Entfernung der Ablagerungen ohne mechanische Einwirkungen auf Teile des Schweißbrenners, weshalb diese geschont werden und somit deren Lebensdauer erhöht werden kann.

Um den Schweißbrenner vor der elektromagnetischen Reinigung einerseits abzukühlen und andererseits auch die Entfernung der Verunreinigung durch entsprechende Reinigungsmittel zu erleichtern, wird der Schweißbrenner üblicherweise in eine Flüssigkeit getaucht. Diese Flüssigkeit kann aus Wasser oder aus Mischungen von Wasser mit bestimmten Lösungsmitteln bestehen. Für eine effiziente elektromagnetische Reinigung ist es von Vorteil, wenn die Metallspritzer auf dem Schweißbrenner durch das Eintauchen in eine Reinigungsflüssigkeit rasch abgekühlt werden. Diese rasche Abkühlung bewirkt aufgrund der unterschiedlichen Wärmeausdehnung der Metallspritzer und der üblicherweise aus Kupfer bestehenden Gasdüse eine Verringerung der Haftung der Metallspritzer auf dem Schweißbrenner.

Eine Anordnung zur Reinigung von Schweißbrennern mit einer Wanne mit Flüssigkeit zum Eintauchen des Schweißbrenners und einer Spule zur elektromagnetischen Reinigung des Schweißbrenners wird beispielsweise in der WO 01/56730 A2 beschrieben. Dabei ist ein die Flüssigkeitswanne und die Spule enthaltender Ständer unmittelbar neben dem zu schweißenden Werkstück angeordnet, so dass der Schweißbrenner, welcher insbesondere auf einem Roboterarm montiert ist, auch automatisch zwischen den Schweißvorgängen gereinigt werden kann. Nachteilig dabei ist, dass auf diesem Ständer beispielsweise Versorgungseinrichtungen für die Spule keinen Platz finden, so dass diese über entsprechende Leitungen verbunden werden müssen. Über diese Leitungen zwischen der Versorgungseinrichtung und der Reinigungseinheit können von den hohen Stromimpulsen herrührende elektromagnetische Felder übertragen werden, die zu Störungen von anderen Geräten oder Steuerungen führen können.

Schließlich kann eine Reinigung von Schweißbrennern auch mit Hilfe von Strahldüsen, über die ein kaltes Medium über einen Druckluftstrom auf die zu reinigende Fläche gelenkt wird, erfolgen. Ein derartiges Verfahren und eine derartige Vorrichtung zum Reinigen von Schweißbrennern ist beispielsweise aus der DE 100 63 572 A1 bekannt.

Die Aufgabe der vorliegenden Erfindung besteht in der Schaffung eines Reinigungsverfahrens und einer Reinigungsvorrichtung der angegebenen Art, welches bzw. welche ein rasches und automatisierbares Reinigen unterstützt und besonders für Schweißroboter-Anwendungen geeignet ist. Darüber hinaus soll die Vorrichtung möglichst einfach und kostengünstig aufgebaut sein und möglichst rasch und einfach montier- und demontierbar sein. Die während der Reinigung entfernten Abfälle sollen möglichst einfach entsorgt werden können.

Gelöst wird die erfindungsgemäße Aufgabe in verfahrensmäßiger Hinsicht dadurch, dass sich der Schweißbrenner während des Aufbringens der Reinigungsflüssigkeit bzw. Benetzungsflüssigkeit und des nachfolgenden Aussetzens eines elektromagnetischen Feldes im Wesentlichen in derselben Position befindet. Dadurch kann bei der Reinigung des Schweißbrenners der Arbeitsschritt des Bewegens des Schweißbrenners vom Behälter der Reinigungsflüssigkeit zur Spule zur elektromagnetischen Abreinigung entfallen und somit die Reinigungszeit wesentlich verkürzt werden. Dass sich der Schweißbrenner während des Reinigungsverfahrens im Wesentlichen in derselben Position befindet, soll zum Ausdruck bringen, dass geringfügige Lageveränderungen, beispielsweise in Längsrichtung des Schweißbrenners, zulässig sind. Derartige geringfügige Positionsveränderungen erfordern jedoch nur geringe Zeit, weshalb das Reinigungsverfahren trotzdem sehr rasch durchgeführt werden kann. Im Gegensatz dazu muss bei herkömmlichen Reinigungsverfahren der Schweißbrenner während des Reinigungsvorganges vom Behälter der Reinigungsflüssigkeit zur Spule neu positioniert werden und dieser Positionswechsel gegebenenfalls mehrmals wiederholt werden. Diese Arbeitsschritte erfordern zusätzliche Zeit und erhöhen somit die Reinigungszeit des Schweißbrenners, während der dieser nicht für Schweißprozesse zur Verfügung steht. Bei derartigen Verfahren muss bei der Inbetriebnahme des Schweißroboters zwei Mal die Position definiert werden.

Das Aufbringen der Reinigungsflüssigkeit auf die Spitze des Schweißbrenners kann durch Eintauchen des Schweißbrenners in die Reinigungsflüssigkeit geschehen. Dabei kann der Schweißbrenner in eine Wanne mit Reinigungsflüssigkeit bewegt werden oder aber auch, bei gleichbleibender Position des Schweißbrenners, die Wanne zu dem Schweißbrenner bewegt werden.

Ebenso ist es möglich, dass die Reinigungsflüssigkeit durch Besprühen der Spitze des Schweißbrenners mit Reinigungsflüssigkeit aufgebracht wird. Das Besprühen hat den Vorteil, dass einerseits weniger Reinigungsflüssigkeit verbraucht wird und andererseits ein gezieltes Aufbringen der Reinigungsflüssigkeit auch ins Innere des Schweißbrenners möglich wird. Das Besprühen der Spitze des Schweißbrenners mit Reinigungsflüssigkeit hat gegenüber dem Eintauchen in einen Behälter mit Reinigungsflüssigkeit weiters den Vorteil, dass der Ablösung der Metallspritzer durch die Flüssigkeit kein Widerstand entgegengesetzt wird.

Durch die Reinigungsflüssigkeit bzw. Benetzungsflüssigkeit wird der Schweißbrenner abgekühlt und auch die nachfolgende elektromagnetische Entfernung der Verunreinigung erleichtert.

Bei stärkerer Verunreinigung des Schweißbrenners können die Schritte des Aufbringens der Reinigungsflüssigkeit und des elektromagnetischen Abreinigens wiederholt werden. Beim erfindungsgemäßen Verfahren muss dabei die Position des Schweißbrenners nicht oder nicht wesentlich verändert werden, wodurch das Reinigungsverfahren auch bei mehrmaligem Abreinigen rasch durchgeführt werden kann und somit die Standzeiten des Schweißbrenners maximiert werden können.

Bei entsprechender Anordnung der Vorrichtung zum Aufbringen von Reinigungsflüssigkeit unterhalb der Spule zum elektromagnetischen Reinigen kann gemäß einem weiteren Merkmal der Erfindung der Schweißbrenner zum Aufbringen der Reinigungsflüssigkeit gegenüber der Position beim elektromagnetischen Abreinigen abgesenkt werden.

Die erfindungsgemäße Aufgabe wird auch durch eine oben angegebene Vorrichtung zum Reinigen von Schweißbrennern gelöst, wobei die Vorrichtung zum Aufbringen von Reinigungsflüssigkeit und die Spule zusammen mit einem unter der Spule angeordneten Abfallbehälter zur Aufnahme der elektromagnetisch abgereinigten Verunreinigungen in einem gemeinsamen Gehäuse angeordnet sind. Dadurch resultiert eine besonders kompakte Einheit, welche sehr rasch an den jeweiligen Einsatzort gebracht und dort mit nur wenigen Arbeitsschritten in Betrieb genommen werden kann. Durch die Integration des Abfallbehälters werden umliegende Bereiche durch die abgereinigten Metallspritzer oder dgl. nicht beeinflusst. Der Abfallbehälter kann in einfacher Weise von den darin befindlichen Verunreinigungen in regelmäßigen Abständen befreit werden.

Dabei kann die Vorrichtung zum Aufbringen von Reinigungsflüssigkeit durch eine Wanne mit Reinigungsflüssigkeit zum Eintauchen des Schweißbrenners gebildet sein, in welche der Schweißbrenner vor der elektromagnetischen Abreinigung getaucht wird.

Ebenso kann die Vorrichtung zum Aufbringen der Reinigungsflüssigkeit durch zumindest eine Düse gebildet sein. Mit Hilfe der zumindest einen Düse kann die Reinigungsflüssigkeit gezielt auf jene Bereiche des Schweißbrenners gerichtet werden, die am meisten verschmutzt sind. Beispielsweise kann mit Hilfe einer Düse auch die Reinigungsflüssigkeit in das Innere des Schweißbrenners bzw. der Gasdüse des Schweißbrenners eingebracht werden, wo sich ebenfalls häufig Schweißspritzer anlagern.

Vorteilhafterweise ist auch die Versorgungseinrichtung für die Spule im Gehäuse angeordnet. Somit muss das gemeinsame Gehäuse lediglich an die Versorgungsspannung angeschlossen werden, so dass die Spule mit entsprechender elektrischer Energie versorgt werden kann. Durch diese Anordnung sind keine längeren Verbindungsleitungen zwischen Versorgungseinheit und Spule notwendig, welche aufgrund der hohen Stromimpulse zu Störungen von anderen Geräten und Steuerungen führen könnten.

Wenn der Abfallbehälter verschwenkbar angeordnet ist, kann dieser bei Nichtgebrauch aus dem Bereich unterhalb der Spule verschwenkt werden. Auf diese Weise kann beispielsweise Platz für die Wanne mit Reinigungsflüssigkeit oder die Düsen zum Aufbringen der Reinigungsflüssigkeit geschaffen werden. Nach dem Aufbringen der Reinigungsflüssigkeit kann der Abfallbehälter wieder in den Bereich unterhalb der Öffnung der Spule verschwenkt werden, so dass während des elektromagnetischen Abreinigens die herab fallenden Verunreinigungen aufgefangen werden können. Ebenso ist es möglich, dass der Abfallbehälter auch zur Aufnahme der herab tropfenden bzw. herab rinnenden Reinigungsflüssigkeit dient. In diesem Falle befindet sich der Abfallbehälter vorzugsweise während des gesamten Abreinigungsvorganges unterhalb der Öffnung der Spule. In diesem Fall kann der Abfallbehälter mit einem Abscheider für die festen Partikel ausgestattet sein.

Zum leichteren Entleeren des Abfallbehälters ist vorgesehen, dass dieser aus dem Gehäuse entfernbar ist. Dies kann beispielsweise durch eine Konstruktion in Art einer Lade oder dgl. erfolgen.

Um die Vorrichtung zum Aufbringen der Reinigungsflüssigkeit gegebenenfalls mit Flüssigkeit versorgen zu können, ist gemäß einem weiteren Merkmal der Erfindung im Gehäuse ein mit der Vorrichtung zum Aufbringen der Reinigungsflüssigkeit verbundener Nachfüllbehälter angeordnet. Dabei erfolgt die Versorgung der Vorrichtung zum Aufbringen der Reinigungsflüssigkeit mit ausreichender Menge an Flüssigkeit, vorzugsweise automatisch. Dies kann beispielsweise durch eine entsprechende Anordnung des Nachfüllbehälters gegenüber der Vorrichtung zum Aufbringen der Reinigungsflüssigkeit oder auch durch entsprechende Sensoren und Pumpen bewerkstelligt werden.

Ebenso kann ein mit der Vorrichtung zum Aufbringen der Reinigungsflüssigkeit verbundener Flüssigkeitsanschluss vorgesehen sein, über den die Vorrichtung zum Aufbringen der Reinigungsflüssigkeit entleert werden kann oder mit Reinigungsflüssigkeit versorgt werden kann.

Um die Reinigungsvorrichtung einfach zu ihrem Einsatzgebiet transportieren und in seiner Lage verschieben zu können, beinhaltet das Gehäuse gemäß einem weiteren Merkmal der Erfindung Räder oder dgl.. Um die Reinigungsvorrichtung an ihrem Einsatzort stabilisieren und in ihrer Lage fixieren zu können, sind diese Räder oder dgl. mit entsprechenden Feststelleinrichtungen versehen bzw. diese beispielsweise einfahrbar oder einklappbar ausgebildet.

Um eine möglichst automatisierbare Reinigung des Schweißbrenners zu ermöglichen, kann an der Öffnung der Spule eine Einrichtung zur Erfassung der Eintauchtiefe des Schweißbrenners in die Spule angeordnet sein. Dadurch kann jeweils die optimale Eintauchtiefe während des Reinigungsvorganges erzielt werden.

Dabei kann die Einrichtung zur Erfassung der Eintauchtiefe beispielsweise durch eine Lichtquelle und einen optischen Sensor gebildet sein, der die von einem am Schweißbrenner entsprechend angeordneten Reflexelemente, vorzugsweise einem Reflexring, reflektierten Lichtstrahlen erfasst. Auf diese Weise kann der Schweißbrenner so lange in die Öffnung der Spule eingeschoben werden, bis der entsprechende optische Sensor ein Signal erhält, worauf der Vorschub des Schweißbrenners in die Öffnung der Spule gestoppt wird. Am Schweißbrenner selbst muss dabei lediglich ein Reflexelement bzw. ein Reflexring angeordnet sein. Ebenso kann die Eindringtiefe des Schweißbrenners in die Spule durch mechanische Mittel, beispielsweise durch einen Ring am Schweißbrenner, der einen Schalter an der Spule betätigt oder andere Konstruktionen, registriert werden.

Um neben der Reinigung des Schweißbrenners auch optimale Bedingungen hinsichtlich des allenfalls vorhandenen Schweißdrahtes zu schaffen, ist vorgesehen, dass im gemeinsamen Gehäuse auch eine Einrichtung zum Abschneiden eines dem Schweißbrenner zugeführten Schweißdrahtes angeordnet ist. Durch diese ebenfalls in der Reinigungsvorrichtung angeordnete Einrichtung kann nach der elektromagnetischen Abreinigung des Schweißbrenners auch eine optimale Einstellung des Schweißdrahtes erfolgen. Für eine optimale Funktion des Schweißbrenners ist es erforderlich, dass der Schweißdraht eine bestimmte Länge (der sogenannten "stick out" -Länge) aus dem Schweißbrenner ragt.

Dabei ist die Abschneideinrichtung vorzugsweise unterhalb der Spule angeordnet. Dadurch kann vor, während oder nach der elektromagnetischen Reinigung der Schweißdraht entsprechend abgelenkt werden. Somit ist es nicht erforderlich, den Schweißbrenner an eine eigene Station zum Abschneiden des Schweißdrahtes zu führen. Dadurch kann die erforderliche Zeit zum Reinigen des Schweißbrenners gering gehalten werden, so dass der Schweißbrenner rasch wieder für Schweißarbeiten zur Verfügung steht.

Gemäß einem weiteren Merkmal der Erfindung ist vorgesehen, dass unterhalb der Spule eine Anschlagplatte angeordnet ist, gegen die der Schweißdraht vorgeschoben wird, zur Einstellung der Länge, um welche der Schweißdraht aus dem Schweißbrenner ragt. Somit kann die oben erwähnte "stick out" -Länge auf den optimalen Wert eingestellt werden.

Dabei kann die Anschlagplatte aus elektrisch leitfähigem Material gebildet sein, so dass der Anschlag des Schweißdrahtes durch den resultierenden elektrischen Kontakt erfassbar ist. Anstelle derartiger Konstruktionen können auch optische Sensoren zur Erfassung der "stick out" -Länge angeordnet sein.

Um eine optimale Temperatur der Reinigungsflüssigkeit zu erhalten, ist vorzugsweise eine Einrichtung zur Regelung der Temperatur der Reinigungsflüssigkeit vorgesehen. Dabei kann es sich um einen in sich geschlossenen Regelkreis handeln, der die Reinigungsflüssigkeit immer auf einer bestimmten Temperatur hält oder auch durch einen von außen beeinflussbaren Regelkreis, wobei veschiedene Temperaturniveaus, beispielsweise für die Schaffung optimaler Bedingungen für unterschiedliche Schweißbrenner, eingestellt werden können.

Zur Detektierung der Anwesenheit eines Schweißbrenners in der Reinigungsvorrichtung können entsprechende Sensoren vorgesehen sein. Dabei kann es sich um optische, induktive, kapazitive aber auch mechanische Sensoren handeln.

Um einen möglichst automatisierbaren Reinigungsvorgang zu erzielen, können auch entsprechende Sensoren zur Erfassung des Füllstandes in der Wanne und bzw. oder im Nachfüllbehälter vorgesehen sein. Dabei kann ein Unterschreiten des Flüssigkeitspegels in der Wanne zu einer automatischen Nachbefüllung oder beispielsweise ein Unterschreiten eines bestimmten Wertes im Nachfüllbehälter zu einer automatisierten Benachrichtigung des Personals über einen erwünschten Austausch des Nachfüllbehälters führen.

Dabei ist vorteilhafterweise eine Steuereinrichtung zur Steuerung des Reinigungsvorganges im Gehäuse angeordnet. Diese Steuerungseinrichtung, welche beispielsweise durch einen Rechner oder einen Mikroprozessor gebildet sein kann, erledigt den gesamten Reinigungsvorgang automatisch.

Anstelle einer im Gehäuse angeordneten Steuerungseinrichtung kann auch eine Schnittstelle zur Verbindung mit einer Steuereinrichtung zur Steuerung des Reinigungsvorganges am Gehäuse angeordnet sein. Dadurch können beispielsweise vorhandene Rechner, die auch die Steuerung des Schweißroboters durchführen, zur Steuerung des Reinigungsvorganges herangezogen werden.

Diese Steuereinrichtung bzw. die Schnittstelle für die Steuereinrichtung ist mit der Spule der Versorgungseinrichtung für die Spule und der allfälligen Einrichtung zur Erfassung der Eintauchtiefe des Schweißbrenners und der allfälligen Abschneideinrichtung und der allfälligen Temperaturregelungseinrichtung und allfälliger Sensoren verbunden. Auf diese Weise wird eine optimale automatische Steuerung des Reinigungsvorganges möglich.

Dabei können alle vorhandenen Komponenten im Gehäuse über ein Bussystem miteinander verbunden sein.

Darüber hinaus ist es zweckmäßig, wenn am Gehäuse zumindest eine Anzeige angeordnet ist, welche das Personal über Betriebszustände informieren kann. Dabei kann es sich bei der Anzeige lediglich um Leuchten oder auch um einen Bildschirm handeln.

Unterhalb oder innerhalb des Gehäuses kann ein Freiraum angeordnet sein, der vorzugsweise zur Aufnahme von Nachfüllbehältern dienen kann. Dabei können die Nachfüllbehälter lediglich im Freiraum aufbewahrt werden, oder über eine Pumpe mit der Flüssigkeitswanne oder den Düsen verbunden sein, so dass über besonders lange Zeiten eine Versorgung der Vorrichtung zum Aufbringen der Reinigungsflüssigkeit mit der Reinigungsflüssigkeit gewährleistet wird. Dadurch resultieren sehr lange Standzeiten der Reinigungsvorrichtung, welche insbesondere bei automatisierten Schweißanlagen, wie sie z.B. in der Autoindustrie eingesetzt werden, von Bedeutung sind.

Die erfindungsgemäße Aufgabe wird auch durch eine oben genannte Reinigungsvorrichtung gelöst, wobei die Vorrichtung zum Aufbringen von Reinigungsflüssigkeit innerhalb bzw. unterhalb der Öffnung der Spule angeordnet ist, so dass das Aufbringen der Reinigungsflüssigkeit und das elektromagnetische Abreinigen im Wesentlichen in derselben Position des Schweißbrenners erfolgen kann. Somit ist es nicht erforderlich, den Schweißbrenner nach dem Aufbringen der Reinigungsflüssigkeit neu zu positionieren, wodurch Zeit gespart wird und somit die Reinigungszeit des Schweißbrenners, während der dieser nicht für Schweißprozesse zur Verfügung steht, reduziert werden.

Die Vorrichtung zum Aufbringen der Reinigungsflüssigkeit kann durch eine Wanne mit Reinigungsflüssigkeit gebildet werden, in welche der Schweißbrenner vor der elektromagnetischen Abreinigung getaucht wird. Dabei kann, wie bereits oben erwähnt, der Schweißbrenner in Richtung der Wanne bewegt werden.

Alternativ dazu kann auch die Wanne mit einer Vorrichtung zum vorzugsweise vertikalen Bewegen verbunden sein und diese zum Zweck des Aufbringens der Reinigungsflüssigkeit in Richtung des Schweißbrenners bewegt werden. Neben einer vertikalen Bewegung kann die Wanne beispielsweise auch verschwenkbar unterhalb der Öffnung der Spule angordnet werden und nach dem Eintauchen des Schweißbrenners wieder von dieser Position weg bewegt werden.

Ebenso ist es möglich, dass die Vorrichtung zum Aufbringen der Reinigungsflüssigkeit durch zumindest eine Düse gebildet ist. Mit Hilfe der zumindest einen Düse kann die Reinigungsflüssigkeit gezielt auf jene Bereiche des Schweißbrenners gerichtet werden, die am meisten verschmutzt sind. Beispielsweise kann mit Hilfe einer Düse auch die Reinigungsflüssigkeit in das Innere des Schweißbrenners bzw. der Gasdüse des Schweißbrenners eingebracht werden, wo sich ebenfalls häufig Schweißspritzer anlagern.

Dabei können mehrere Düsen innerhalb der Öffnung der Spule beispielsweise ringförmig angeordnet sein und in verschiedenen Winkeln in Richtung des Schweißbrenners weisen.

Um auch das Innere des Schweißbrenners gezielt mit Reinigungsflüssigkeit versehen zu können, ist zumindest eine Düse unterhalb der Öffnung der Spule angeordnet und weist in Richtung der Spitze des Schweißbrenners.

Gemäß einem weiteren Merkmal der Erfindung ist vorgesehen, dass zumindest eine Düse bewegbar angeordnet ist. Durch diese Bewegbarkeit kann einerseits die Richtung des Reinigungsflüssigkeitsstrahls beeinflusst werden und andererseits auch die gesamte Düse bzw. alle Düsen während der elektromagnetischen Abreinigung weg bewegt werden.

Um die Vorrichtung zum Aufbringen der Reinigungsflüssigkeit gegebenenfalls mit Reinigungsflüssigkeit versorgen zu können, ist gemäß einem weiteren Merkmal der Erfindung ein Nachfüllbehäter vorgesehen, welcher mit der Vorrichtung zum Aufbringen der Reinigungsflüssigkeit vorzugsweise über eine Pumpe oder dgl. und entsprechende Schläuche verbunden ist. Dabei erfolgt die Versorgung mit neuer Reinigungsflüssigkeit vorzugsweise automatisch. Für die Wiederbefüllung der Wanne mit Reinigungsflüssigkeit erfolgt dies durch Förderung einer entsprechenden Menge der Reinigungsflüssigkeit vom Nachfüllbehälter über die Pumpe zur Wanne. Bei Verwendung von Düsen zum Aufbringen der Reinigungsflüssigkeit wird die Reinigungsflüssigkeit idealerweise mit Hilfe von Druckluft aus einem luftdicht abgeschlossenen Vorratsbehälter über die Düsen zum Scheißbrenner eingeblasen. Dabei kann eine einstellbare Menge an Reinigungsflüssigkeit aus einem kleinen Zwischenbehälter über das Beaufschlagen von Druckluft über eine Schlauchleitung den Düsen zugeführt werden. Sobald die Druckluft abgeschaltet wird, entsteht kurzzeitig ein Unterdruck in dem Zwischenbehälter, wodurch dieser automatisch Flüssigkeit aus dem größeren Vorratsbehälter in den kleinen Zwischenbehälter hinein zieht. Beim nächsten Beaufschlagen mit Druckluft wird dann dieser kleine zwischenbehälter wieder entleert.

Ebenso kann die Vorrichtung zum Aufbringen der Reinigungsflüssigkeit mit einem Flüssigkeitsanschluss verbunden sein.

Um eine möglichst automatisierbare Reinigung des Schweißbrenners zu ermöglichen, kann an der Öffnung der Spule eine bereits oben beschriebene Einrichtung zur Erfassung der Eintauchtiefe des Schweißbrenners in die Spule angeordnet sein, welche beispielsweise durch einen optischen Sensor gebildet sein kann.

Weiters kann auch eine bereits oben erwähnte Abschneideinrichtung angeordnet sein, welche vorzugsweise unterhalb der Spule angeordnet ist.

Schließlich kann eine Einrichtung zur Regelung der Temperatur der Reinigungsflüssigkeit vorgesehen sein, um eine optimale Temperatur der Reinigungsflüssigkeit zu erhalten.

Zur Detektierung der Anwesenheit eines Schweißbrenners in der Reinigungsvorrichtung können wiederum entsprechende Sensoren vorgesehen sein.

Zur Realisierung eines möglichst automatisierten Reinigungsvorgangs, können weiters entsprechende Sensoren zur Erfassung des Füllstands in der Wanne und bzw. oder im Nachfüllbehälter vorgesehen sein.

Schließlich können eine Steuereinrichtung oder eine Schnittstelle zur Verbindung mit einer Steuereinrichtung, welche vorzugsweise mit der Spule und der Versorgungseinrichtung für die Spule und allfälligen weiteren Komponenten der Reinigungsvorrichtung verbunden sind, vorgesehen sein.

Dabei können alle vorhandenen Komponenten der Reinigungsvorrichtung über ein Bussystem miteinander verbunden sein.

Die vorliegende Erfindung wird anhand der beiliegenden Zeichnungen, welche Ausführungsbeispiele der Erfindung zeigen, näher erläutert.

Darin zeigen:
Fig. 1 eine perspektivische Ansicht einer erfindungsgemäßen Reinigungsvorrichtung;
Fig. 2 ein Schnittbild durch eine Spule mit darin angeordnetem Schweißbrenner mit einer Einrichtung zur Erfassung der Eindringtiefe des Schweißbrenners;
Fig. 3 ein Schnittbild durch eine Spule mit darin angeordnetem Schweißbrenner mit einer Einrichtung zum Abschneiden des Schweißdrahtes an einer definierten Länge;
Fig. 4 ein Blockschaltbild der in der Reinigungsvorrichtung angeordneten Komponenten.
Fig. 5 eine perspektivische Ansicht einer weiteren Ausführungsform der erfindungsgemäßen Reinigungsvorrichtung;
Fig. 6 ein Schnittbild durch eine Spule mit darin angeordnetem Schweißbrenner und darunter angeordneter Wanne mit Reinigungsflüssigkeit;
Fig. 7 eine gegenüber Fig. 6 abgeänderte Ausführungsform;
Fig. 8 ein Schnittbild durch eine Spule mit darin angeordnetem Schweißbrenner und darunter angeordneter Abschneideinrichtung und beweglich angeordneter Wanne mit Reinigungsflüssigkeit und Abfallbehälter;
Fig. 9 eine Reinigungsvorrichtung mit Düsen zum Aufsprühen der Reinigungsflüssigkeit; und
Fig. 10 ein weiteres Blockschaltbild der in der Reinigungsvorrichtung angeordneten Komponenten.

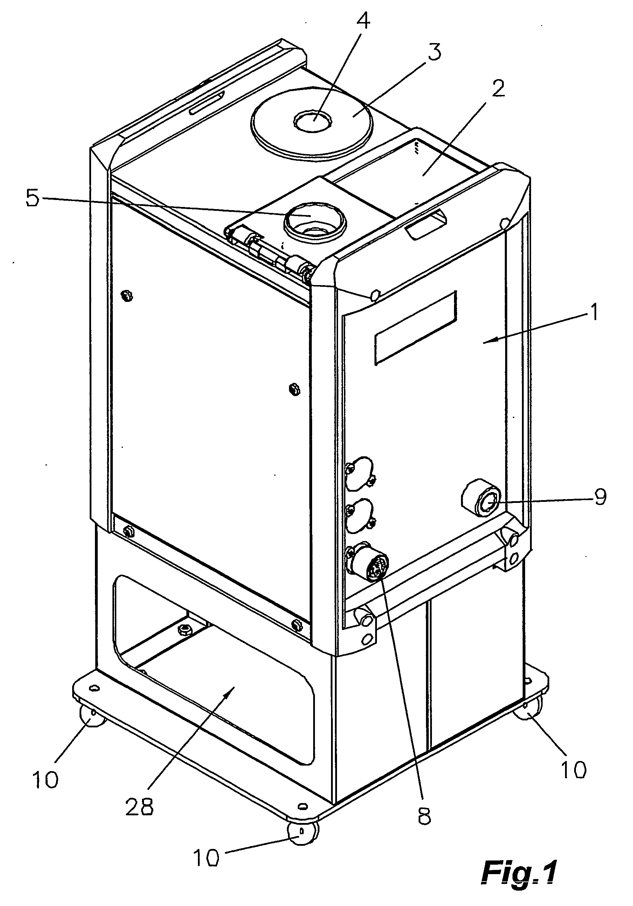

Fig. 1 zeigt eine perspektivische Ansicht einer Reinigungsvorrichtung umfassend ein Gehäuse 1, das in Form eines Schrankes angeordnet ist und alle für die Reinigung des Schweißbrenners vorgesehenen Komponenten enthält. Dementsprechend ist im Gehäuse 1 eine Wanne 2 für die Flüssigkeit, beispielsweise die Reinigungsflüssigkeit, vorgesehen, in die der Schweißbrenner eingetaucht wird, um die daran anhaftenden Metallspritzer abzukühlen. Neben der Flüssigkeitswanne 2 kann ein Nachfüllbehälter 5 angeordnet werden, über den die Wanne 2 mit Flüssigkeit versorgt werden kann. Hinter der Wanne 2 ist die Spule 3 mit einer Öffnung 4 platziert. In die Öffnung 4 der Spule 3 wird der Schweißbrenner nach dem Tauchen in die Wanne 2 platziert. Nach dem Versorgen der Spule 3 mit elektrischem Strom werden die Metallspritzer am Schweißbrenner berührungslos entfernt. Die Verunreinigungen fallen in einen unter der Spule 3 angeordneten Abfallbehälter 6 (nicht dargestellt). Dieser Abfallbehälter 6 kann durch Öffnen eines Teiles des Gehäuses 1 leicht entfernt und entleert werden. Die Versorgungseinrichtung 7 (nicht dargestellt) für die Spule 3 ist ebenfalls vorzugsweise im Gehäuse 1 angeordnet. Darüber hinaus ist es möglich, dass die Versorgungseinrichtung 7 extern angeordnet ist und über eine entsprechende Anschlussbuchse 8 mit der Spule 3 verbunden wird. Ebenso ist es möglich, dass am Gehäuse 1 ein entsprechender Flüssigkeitsanschluss 9 angeordnet ist, über den beispielsweise die Wanne 2 entleert werden kann oder auch die Wanne 2 mit Reinigungsflüssigkeit versorgt werden kann. Um das Gehäuse 1 leicht zum Einsatzort bringen zu können, ist es möglich, dass Räder 10 oder dgl. angeordnet sind. Diese Räder 10 oder dergl. können mit entsprechenden Feststellmitteln (nicht dargestellt) versehen sein, um die Reinigungsvorrichtung am jeweiligen Einsatzort ausreichend fixieren und in ihrer Lage stabilisieren zu können. Unterhalb bzw. innerhalb des Gehäuses 1 kann ein Freiraum 28 gebildet sein, der zur Lagerung der Nachfüllbehälter 5 oder weiterem beim Reinigungsvorgang anfallenden Verbrauchsmaterial oder dgl. dienen kann. Darüber hinaus ist es möglich, einen entsprechend großen Nachfüllbehälter 5 in diesem Freiraum 28 anzuordnen und diesen über eine Leitung und eine Pumpe mit der Wanne 2 zu verbinden. Dadurch können besonders lange Standzeiten der Reinigungsvorrichtung erreicht werden, welche insbesondere in der Autoindustrie mit Roboterschweißanlagen von Bedeutung sind.

Die Nachfüllung der Wanne 2 mit Flüssigkeit erfolgt dabei vorzugsweise vollautomatisch.

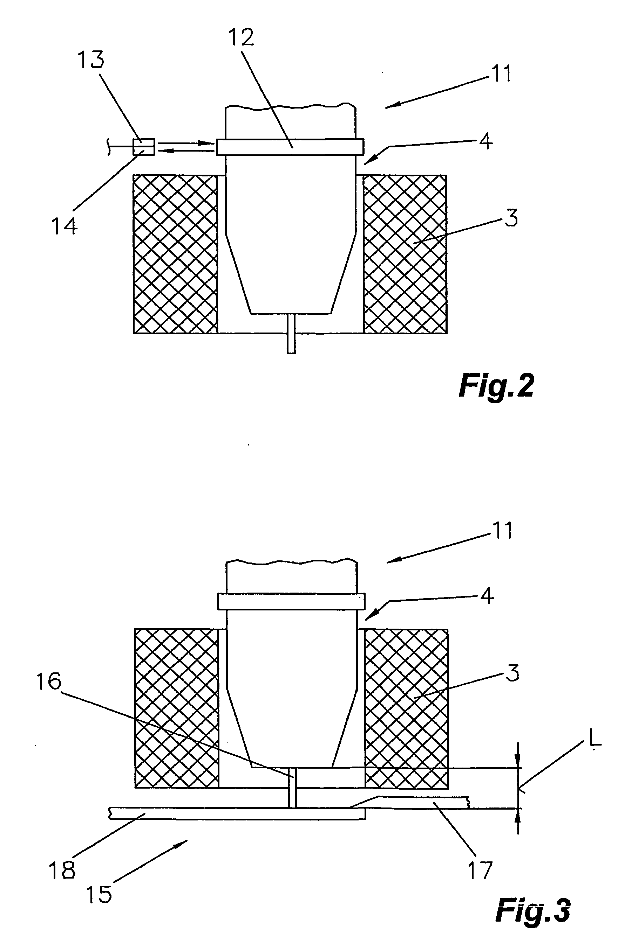

Fig. 2 zeigt eine schematische Schnittansicht durch die Spule 3 mit eingebrachtem Schweißbrenner 11, wobei am Schweißbrenner 11 ein Reflexring 12 angeordnet ist, durch den die Eintauchtiefe des Schweißbrenners 11 in der Öffnung 4 der Spule 3 erfasst werden kann. Zu diesem Zweck umfasst die Einrichtung zur Erfassung der Eintauchtiefe eine Lichtquelle 13 und einen optischen Sensor 14, der die vom Reflexring 12 reflektierten Lichtstrahlen erfasst. Nach Erfassen des Lichtes durch den optischen Sensor 14 kann der Vorschub, mit dem der Schweißbrenner 11 in die Öffnung 4 der Spule 3 eingebracht wird, gestoppt werden. Natürlich kann die Einrichtung zur Erfassung der Eintauchtiefe des Schweißbrenners 11 auch durch andere, beispielsweise mechanische Elemente gebildet sein.

Fig. 3 zeigt eine schematische Ansicht durch eine Spule 3 mit darin eingeführtem Schweißbrenner 11, wobei unterhalb der Spule 3 eine Einrichtung 15 zum Abschneiden eines dem Schweißbrenner 11 zugeführten Schweißdrahtes 16 angeordnet ist. Dabei befindet sich unterhalb der Spule 3 ein Messer 17, mit dem der Schweißdraht 16 abgeschnitten werden kann. Mit Hilfe einer Anschlagplatte 18, welche vorzugsweise aus elektrisch leitfähigem Material gebildet ist, kann die optimale Länge L, um welche der Schweißdraht 16 aus dem Schweißbrenner 11 ragt, eingestellt werden. Bei dieser Länge L handelt es sich um die sogenannte "stick-out"-Länge, welche für optimales Funktionieren des Schweißbrenners 11 wichtig ist. Zur Einstellung der optimalen Länge L wird der Schweißdraht 16 solange vorgeschoben, bis er an der Anschlagplatte 18 anliegt. Der Kontakt des Schweißdrahtes 16 mit der Anschlagplatte 18 kann durch die Messung des elektrischen Widerstandes zwischen Schweißdraht 16 und Anschlagplatte 18 oder durch das Anlegen eines elektrischen Stromes in besonders einfacher Weise nachgewiesen werden.

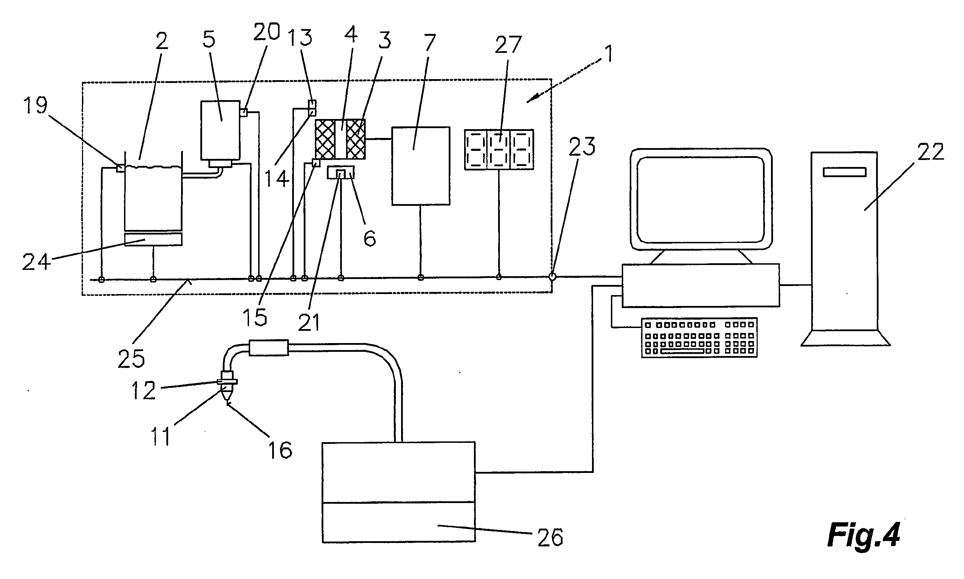

Fig. 4 zeigt ein schematisches Blockschaltbild der Komponenten der Reinigungsvorrichtung. Dabei sind die Wanne 2, die Spule 3 und die Versorgungseinrichtung 7 sowie ein allfälliger Nachfüllbehälter 5 vorteilhafterweise innerhalb eines gemeinsamen Gehäuses 1 angeordnet. An der Wanne 2 kann ein Sensor 19 zur Erfassung des Füllstandes in der Wanne 2 vorgesehen sein. Ebenso kann ein Sensor 20 zur Erfassung des Füllstandes im Nachfüllbehälter 5 angeordnet sein. Oberhalb der Spule 3 kann eine Einrichtung zur Erfassung der Eintauchtiefe des Schweißbrenners 11 vorgesehen sein, welcher beispielsweise durch einen oben beschriebenen optischen Sensor 14 und einer Lichtquelle 13 zusammen mit einem am Schweißbrenner 11 angeordneten Reflexring 12 gebildet sein kann. Unterhalb der Spule 3 ist der Abfallbehälter 6 angeordnet, der mit einem Sensor 21 zur Erfassung der Menge des Abfalls ausgestattet sein kann. Ebenfalls unter der Spule 3 kann die Abschneideinrichtung 15 für den Schweißdraht 16 platziert sein. Unterhalb der Wanne 2 kann eine Einrichtung 24 zur Regelung der Temperatur der in der Wanne 2 befindlichen Flüssigkeit angeordnet sein. Um eine automatische Regelung des Reinigungsvorganges bewerkstelligen zu können, sind die Spule 3, die Versorgungseinrichtung 7 für die Spule 3, die allfällige Einrichtung zur Erfassung der Eintauchtiefe des Schweißbrenners 11 in der Spule 3, die allfällige Abschneideinrichtung 15 und die allfällige Temperaturregelungseinrichtung 24 sowie allfällige Sensoren 19, 20, 21, vorzugsweise über ein Bussystem 25 miteinander verbunden und mit einer entsprechenden Steuereinrichtung 22, welche beispielsweise durch einen Rechner gebildet sein kann, verbunden. Anstelle einer im Gehäuse 1 integrierten Steuereinrichtung 22 kann auch das Bussystem 25 über eine entsprechende Schnittstelle 23 mit einer externen Steuereinrichtung 22 verbunden werden. Der Schweißbrenner 11 bzw. die gesamte Schweißanlage bzw. der Schweißroboter 26 wird ebenfalls mit dieser Steuereinrichtung 22 verbunden. Zur Anzeige bestimmter Betriebszustände kann am Gehäuse 1 eine Anzeige 27, welche ebenfalls mit dem Bussystem 25 verbunden sein kann, angeordnet sein.

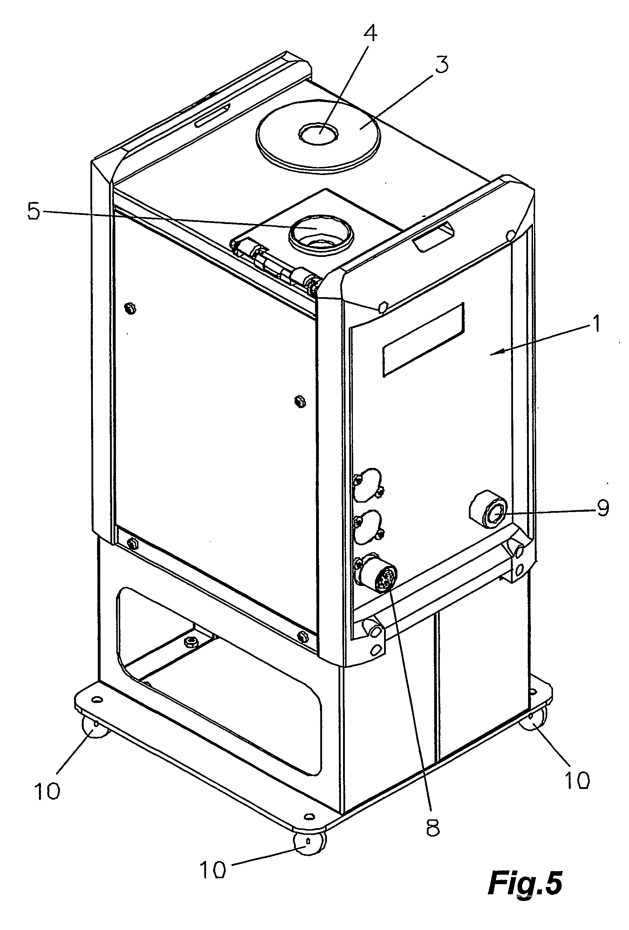

Fig. 5 zeigt eine perspektivische Ansicht einer weiteren Ausführungsform der Reinigungsvorrichtung, wobei gegenüber der Variante gemäß Fig. 1 die Vorrichtung zum Aufbringen der Reinigungsflüssigkeit unterhalb der Spule 3 innerhalb des Gehäuses 1 angeordnet ist (nicht sichtbar). Durch die Anordnung der Vorrichtung zum Aufbringen der Reinigungsflüssigkeit bzw, Benetzungsflüssigkeit unterhalb der Öffnung 4 der Spule 3 kann der Reinigungsvorgang bei im Wesentlichen gleichbleibender Position des Schweißbrenners erfolgen.

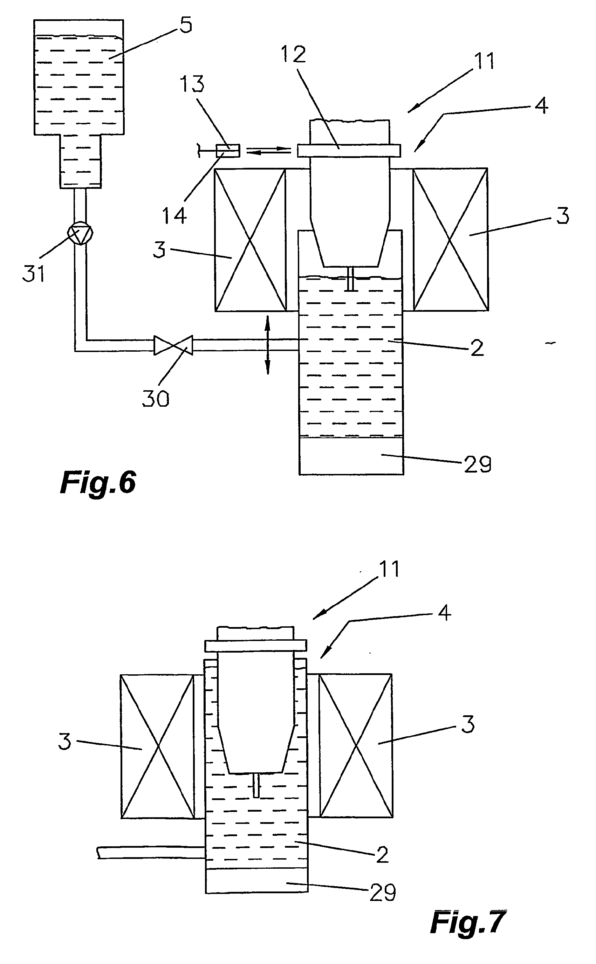

Fig. 6 zeigt eine schematische Schnittansicht durch eine Spule 3 mit einem Schweißbrenner 11, der in der Öffnung 4 der Spule 3 angeordnet ist. Es kann eine Einrichtung zur Erfassung der Eintauchtiefe des Schweißbrenners 11 in die Öffnung 4 der Spule 3 entsprechend Fig. 2 vorgesehen sein. Erfindungsgemäß ist unterhalb der Spule 3 die durch eine Wanne 2 realisierte Vorrichtung zum Aufbringen der Reinigungsflüssigkeit angeordnet. Die Wanne 2 kann mit einer Vorrichtung 29 zum vorzugsweise vertikalen Bewegen verbunden sein. Auf diese Weise kann das Eintauchen der Spitze des Schweißbrenners 11 in die Reinigungsflüssigkeit durch Anheben der Wanne 2 geschehen, wonach die Wanne 2 wieder abgesenkt und allenfalls verschwenkt wird. Die Wanne 2 kann mit einem Nachfüllbehälter 5 verbunden sein. Dabei kann die Nachfüllung der Wanne 2 derart erfolgen, dass der Nachfüllbehälter 5 höher angeordnet ist wie die Wanne 2, so dass nur durch Öffnen eines Ventils 30 die Reinigungsflüssigkeit vom Nachfüllbehälter 5 in die Wanne 2 fließt. Alternativ oder zusätzlich zum Ventil 30 kann natürlich auch eine Pumpe 31 angeordnet sein, mit Hilfe welcher die Reinigungsflüssigkeit vom Nachfüllbehälter 5 in die Wanne 2 transportiert. Durch das Absenken der Wanne 2 nach der elektromagnetischen Abreinigung des Schweißbrenners 11 werden die gelösten Metallspritzer durch die Oberflächenspannung der Reinigungsflüssigkeit in der Wanne 2 abgelöst, worauf diese in der Wanne 2 absinken.

Fig. 7 zeigt eine Variante einer Reinigungsvorrichtung, bei der die durch eine Wanne 2 realisierte Vorrichtung zum Aufbringen der Reinigungsflüssigkeit innerhalb der Öffnung 4 der Spule 3 angeordnet ist und über die Vorrichtung 29 allenfalls vertikal bewegt werden kann. Die elektromagnetische Abreinigung des Schweißbrenners 11 kann zu einem Zeitpunkt erfolgen, zu dem der Schweißbrenner 11 in die Reinigungsflüssigkeit in der Wanne 2 eintaucht. Die abgereinigten Metallspritzer sinken dann auf den Boden der Wanne 2.

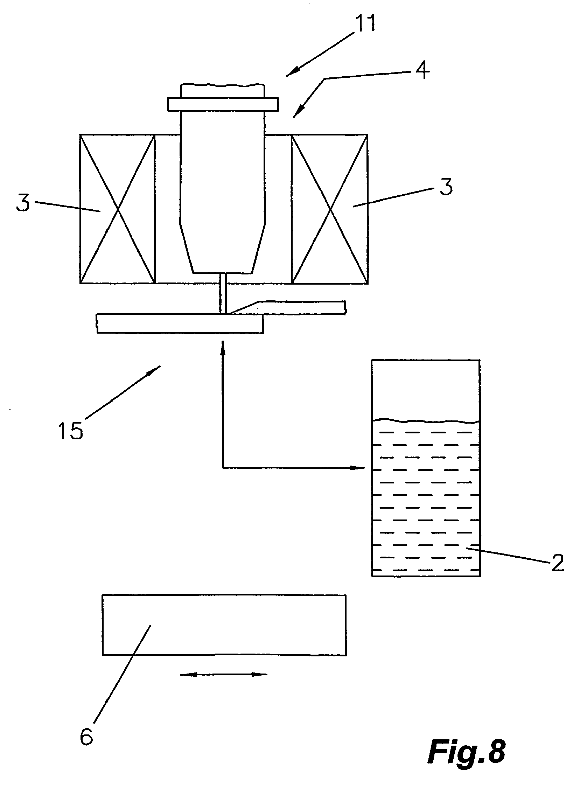

Fig. 8 zeigt eine weitere Variante einer Reinigungsvorrichtung, bei der unterhalb der Öffnung 4 der Spule 3 ein Abfallbehälter 6 angeordnet ist, der vorzugsweise verschwenkbar oder verschiebbar ist. Dadurch kann ohne Positionsveränderung des Schweißbrenners 11 die Reinigung durch Bewegung der Wanne 2 zur Spitze des Schweißbrenners 11 vorgenommen werden. Nach dem Eintauchen der Spitze des Schweißbrenners 11 kann die Wanne 2 weg bewegt werden, so dass der Abfallbehälter 6 die elektromagnetisch abgereinigten Verunreinigungen auffangen kann. Zusätzlich kann eine Einrichtung 15 zum Abschneiden eines dem Schweißbrenner 11 zugeführten Schweißdrahtes 16 angeordnet sein. Auch diese Abschneidevorrichtung 15 kann bewegbar angeordnet sein, so dass sie nur bei Bedarf unterhalb der Spule 3 angeordnet werden kann.

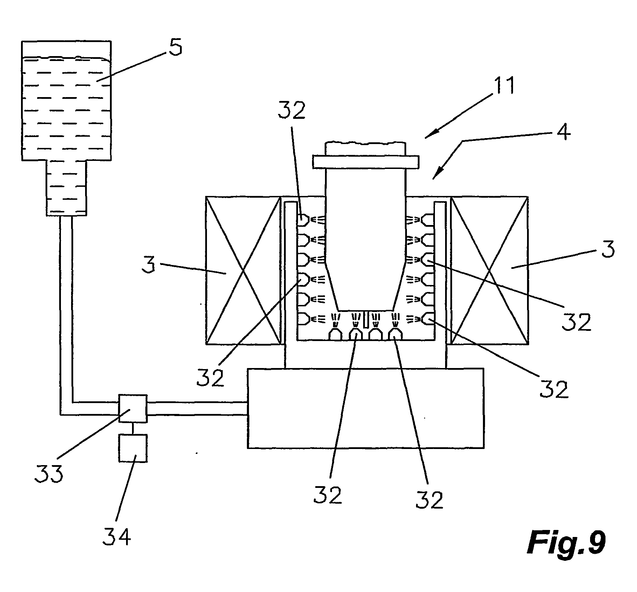

Fig. 9 zeigt eine Variante der Erfindung, bei der die Vorrichtung zum Aufbringen der Reinigungsflüssigkeit durch mehrere Düsen 32 gebildet ist. Die Düsen 32 können innerhalb der Öffnung 4 der Spule 3 und bzw. oder unterhalb der Öffnung 4 der Spule 3 angeordnet sein und sind so zum Schweißbrenner 11 gerichtet, dass sie diesen an jenen Stellen mit Reinigungsflüssigkeit besprühen, welche die meisten Verunreinigungen aufweisen. Die unterhalb der Öffnung 4 der Spule 3 angeordneten Düsen 32 sind so zum Schweißbrenner 11 gerichtet, dass sie auch im Inneren der Gasdüse des Schweißbrenners 11 die Reinigungsflüssigkeit aufbringen können, wo ebenfalls häufig Schweißspritzer die Öffnung der Gasdüse verunreinigen. Die Düsen 32 werden beispielsweise über einen Zwischenbehälter 33 mit dem Nachfüllbehälter 5 für die Reinigungsflüssigkeit verbunden, wobei eine einstellbare Menge an Reinigungsflüssigkeit durch Druckluft, welche von einer Druckluftquelle 34 herrührt den Düsen 32 zugeführt wird. Sobald die Druckluft wieder weggenommen wird, entsteht im Zwischenbehälter 33 kurzzeitig ein Unterdruck, wodurch automatisch Reinigungsflüssigkeit vom Nachfüllbehälter 5 in den Zwischenbehälter 33 gezogen wird. Beim nächsten Druckluftimpuls durch die Druckluftquelle 34 können die Düsen 32 wieder mit Reinigungsflüssigkeit beaufschlagt werden.

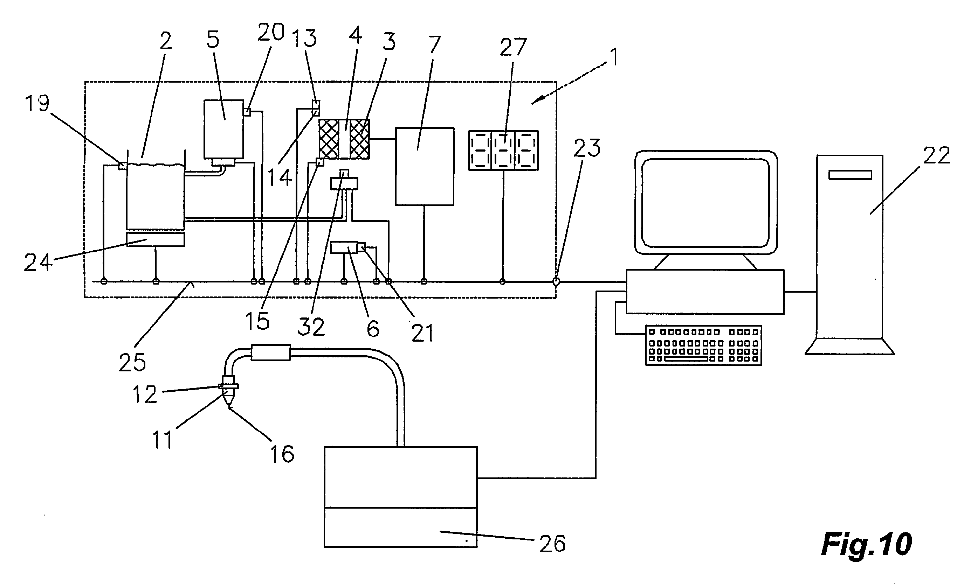

Fig. 10 zeigt ein schematisches Blockschaltbild der Komponenten der Reinigungsvorrichtung in gegenüber Fig. 4 abgeänderter Form. Dabei können die Wanne 2, die Spule 3 und die Versorgungseinrichtung 7 sowie ein allfälliger Nachfüllbehälter 5 vorteilhafterweise innerhalb eines gemeinsamen Gehäuses 1 angeordnet sein. Zusätzlich zu den bereits in Fig. 4 beschriebenen sein. Zusätzlich zu den bereits in Fig. 4 beschriebenen Komponenten können auch die Düsen 32 bzw. die Vorrichtung 29 zum vertikalen Bewegen der Wanne 2 mit der Steuereinrichtung 22 vorzugsweise über das Bussystem 25 verbunden sein. Weiters können andere Komponenten, wie z.B. ein Ventil 30, die Pumpe 31, ein Sensor zur Erfassung des Füllstandes in einem Zwischenbehälter 33, sowie die Druckluftquelle 34, mit der Steuereinrichtung 22 vorzugsweise über das Bussystem 25 verbunden sein (nicht dargestellt).

## Patentansprüche

1. Verfahren zum Reinigen von Schweißbrennern, wobei auf die Spitze des Schweißbrenners Reinigungsflüssigkeit bzw. Benetzungsflüssigkeit aufgebracht wird und anschließend die Spitze des Schweißbrenners zur berührungslosen Entfernung von Verunreinigungen einem elektromagnetischen Feld ausgesetzt wird, **dadurch gekennzeichnet, dass** sich der Schweißbrenner während des Aufbringens der Reinigungsflüssigkeit bzw. Benetzungsflüssigkeit und des nachfolgenden Aussetzens eines elektromagnetischen Feldes im Wesentlichen in der selben Position befindet.

2. Reinigungsverfahren nach Anspruch 1, **dadurch gekennzeichnet, dass** die Reinigungsflüssigkeit durch Eintauchen der Spitze des Schweißbrenners in die Reinigungsflüssigkeit aufgebracht wird.

3. Reinigungsverfahren nach Anspruch 1, **dadurch gekennzeichnet, dass** die Reinigungsflüssigkeit durch Besprühen der Spitze des Schweißbrenners mit Reinigungsflüssigkeit aufgebracht wird.

4. Reinigungsverfahren nach einem der Ansprüche 1 bis 3, **dadurch gekennzeichnet, dass** die Schritte des Aufbringens der Reinigungsflüssigkeit und des elektromagnetischen Abreinigens wiederholt werden.

5. Reinigungsverfahren nach einem der Ansprüche 1 bis 4, **dadurch gekennzeichnet, dass** der Schweißbrenner zum Aufbringen der Reinigungsflüssigkeit gegenüber der Position beim elektromagnetischen Abreinigen abgesenkt wird.

6. Vorrichtung zum Reinigen von Schweißbrennern (11) mit einer Vorrichtung zum Aufbringen von Reinigungsflüssigkeit an die Spitze des Schweißbrenners (11) und einer Spule (3) mit einer Öffnung (4) zur Einbringung des Schweißbrenners (11) zur elektromagnetischen Reinigung desselben und mit einer mit der Spule (3) verbundenen Versorgungseinrichtung (7), **dadurch gekennzeichnet, dass** die Vorrichtung zum Aufbringen von Reinigungsflüssigkeit und die Spule (3) zusammen mit einem unter der Spule (3) angeordneten Abfallbehälter (6) zur Aufnahme der elektromagnetisch abgereinigten Verunreinigungen in einem gemeinsamen Gehäuse (1) angeordnet sind.

7. Reinigungsvorrichtung nach Anspruch 6, **dadurch gekennzeichnet, dass** die Vorrichtung zum Aufbringen von Reinigungsflüssigkeit durch eine Wanne (2) mit Reinigungsflüssigkeit zum Eintauchen des Schweißbrenners (11) gebildet ist.

8. Reinigungsvorrichtung nach Anspruch 6, **dadurch gekennzeichnet, dass** die Vorrichtung zum Aufbringen von Reinigungsflüssigkeit durch zumindest eine Düse (32) gebildet ist.

9. Reinigungsvorrichtung nach einem der Ansprüche 6 bis 8, **dadurch gekennzeichnet, dass** die Versorgungseinrichtung (7) für die Spule (3) im Gehäuse (1) angeordnet ist.

10. Reinigungsvorrichtung nach einem der Ansprüche 6 bis 9, **dadurch gekennzeichnet, dass** der Abfallbehälter (8) verschwenkbar angeordnet ist.

11. Reinigungsvorrichtung nach einem der Ansprüche 6 bis 10, **dadurch gekennzeichnet, dass** der Abfallbehälter (6) aus dem Gehäuse (1) entfernbar ist.

12. Reinigungsvorrichtung nach einem der Ansprüche 6 bis 11, **dadurch gekennzeichnet, dass** im Gehäuse (1) ein mit der Vorrichtung zum Aufbringen der Reinigungsflüssigkeit verbundener Nachfüllbehälter (5) angeordnet ist.

13. Reinigungsvorrichtung nach einem der Ansprüche 6 bis 11, **dadurch gekennzeichnet, dass** im Gehäuse (1) ein mit der Vorrichtung zum Aufbringen der Reinigungsflüssigkeit verbundener Flüssigkeitsanschluss (9) angeordnet ist.

14. Reinigungsvorrichtung nach einem der Ansprüche 6 bis 13, **dadurch gekennzeichnet, dass** das Gehäuse (1) Räder (10) oder dgl. beinhaltet.

15. Reinigungsvorrichtung nach einem der Ansprüche 6 bis 14, **dadurch gekennzeichnet, dass** an der Öffnung (4) der Spule (3) eine Einrichtung zur Erfassung der Eintauchtiefe des Schweißbrenners (11) in die Spule (3) angeordnet ist.

16. Reinigungsvorrichtung nach Anspruch 15, **dadurch gekennzeichnet, dass** die Einrichtung zur Erfassung der Eintauchtiefe durch eine Lichtquelle (13) und einen optischen Sensor (14) gebildet ist, der die von einem am Schweißbrenner (11) entsprechend angeordneten Reflexelement, vorzugsweise Reflexring (12), reflektierten Lichtstrahlen erfasst.

17. Reinigungsvorrichtung nach einem der Ansprüche 6 bis 16, **dadurch gekennzeichnet, dass** im Gehäuse (1) eine Einrichtung (15) zum Abschneiden eines dem Schweißbrenner (11) zugeführten Schweißdrahtes (16) angeordnet ist.

18. Reinigungsvorrichtung nach Anspruch 17, **dadurch gekennzeichnet, dass** die Abschneideinrichtung (15) unterhalb der Spule (3) angeordnet ist.

19. Reinigungsvorrichtung nach Anspruch 18, **dadurch gekennzeichnet, dass** unterhalb der Spule (3) eine Anschlagplatte (18) angeordnet ist, gegen die der Schweißdraht (16) vorgeschoben wird, zur Einstellung der Länge (L), um welche der Schweißdraht (16) aus dem Schweißbrenner (11) ragt.

20. Reinigungsvorrichtung nach Anspruch 19, **dadurch gekennzeichnet, dass** die Anschlagplatte (18) aus elektrisch leitfähigem Material gebildet ist, so dass der Anschlag des Schweißdrahtes (16) durch den resultierenden elektrischen Kontakt erfassbar ist.

21. Reinigungsvorrichtung nach einem der Ansprüche 6 bis 20, **dadurch gekennzeichnet, dass** eine Einrichtung zur Regelung der Temperatur der Reinigungsflüssigkeit vorgesehen ist.

22. Reinigungsvorrichtung nach einem der Ansprüche 6 bis 21, **dadurch gekennzeichnet, dass** Sensoren (19, 20) zur Detektierung des Schweißbrenners (11) vorgesehen sind.

23. Reinigungsvorrichtung nach einem der Ansprüche 6 bis 22, **dadurch gekennzeichnet, dass** Sensoren (19, 20) zur Erfassung des Füllstands in der Wanne (2) und bzw. oder im Nachfüllbehälter (5) vorgesehen sind.

24. Reinigungsvorrichtung nach einem der Ansprüche 6 bis 23, **dadurch gekennzeichnet, dass** eine Steuereinrichtung (22) zur Steuerung des Reinigungsvorganges im Gehäuse (1) angeordnet ist.

25. Reinigungsvorrichtung nach einem der Ansprüche 6 bis 24, **dadurch gekennzeichnet, dass** eine Schnittstelle (23) zur Verbindung mit einer Steuereinrichtung (22) zur Steuerung des Reinigungsvorganges am Gehäuse (1) angeordnet ist.

26. Reinigungsvorrichtung nach Anspruch 24 oder 25, **dadurch gekennzeichnet, dass** die Steuereinrichtung (22) bzw. die Schnittstelle (23) für die Steuereinrichtung (22) mit der Spule (3) und der Versorgungseinrichtung (7) für die Spule (3) und der allfälligen Einrichtung zur Erfassung der Eintauchtiefe des Schweißbrenners (11) und der allfälligen Abschneideinrichtung (15) und der allfälligen Temperaturregelungseinrichtung (24) und allfälligen Sensoren (19, 20, 21) verbunden ist.

27. Reinigungsvorrichtung nach einem der Ansprüche 6 bis 26, **dadurch gekennzeichnet, dass** die Komponenten im Gehäuse (1) über ein Bussystem (25) miteinander verbunden sind.

28. Reinigungsvorrichtung nach einem der Ansprüche 6 bis 27, **dadurch gekennzeichnet, dass** am Gehäuse (1) zumindest eine Anzeige (27) angeordnet ist.

29. Reinigungsvorrichtung nach einem der Ansprüche 6 bis 28, **dadurch gekennzeichnet, dass** unterhalb oder innerhalb des Gehäuses (1) ein Freiraum (28), insbesondere zur Lagerung von Nachfüllbehältern (5), angeordnet ist.

30. Reinigungsvorrichtung nach Anspruch 29, **dadurch gekennzeichnet, dass** zumindest ein im Freiraum (28) angeordneter Nachfüllbehälter (5) über eine Pumpe oder dgl. mit der Vorrichtung zum Aufbringen der Reinigungsflüssigkeit verbunden ist.

31. Vorrichtung zum Reinigen von Schweißbrennern (11) mit einer Vorrichtung zum Aufbringen von Reinigungsflüssigkeit an die Spitze des Schweißbrenners (11) und einer Spule (3) mit einer Öffnung (4) zur Einbringung des Schweißbrenners (11) zur elektromagnetischen Reinigung desselben und mit einer mit der Spule (3) verbundenen Versorgungseinrichtung (7), **dadurch gekennzeichnet, dass** die Vorrichtung zum Aufbringen von Reinigungsflüssigkeit innerhalb bzw. unterhalb der Öffnung (4) der Spule (3) angeordnet ist, so dass das Aufbringen der Reinigungsflüssigkeit und das elektromagnetische Abreinigen im Wesentlichen in derselben Position des Schweißbrenners (11) erfolgen kann.

32. Reinigungsvorrichtung nach Anspruch 31, **dadurch gekennzeichnet, dass** die Vorrichtung zum Aufbringen der Reinigungsflüssigkeit durch eine Wanne (2) mit Reinigungsflüssigkeit gebildet ist.

33. Reinigungsvorrichtung nach Anspruch 32, **dadurch gekennzeichnet, dass** die Wanne (2) mit einer Vorrichtung (29) zum vorzugsweise vertikalen Bewegen verbunden ist.

34. Reinigungsvorrichtung nach einem der Ansprüche 31 bis 33, **dadurch gekennzeichnet, dass** die Vorrichtung zum Aufbringen der Reinigungsflüssigkeit durch zumindest eine Düse (32) gebildet ist.

35. Reinigungsvorrichtung nach Anspruch 34, **dadurch gekennzeichnet, dass** mehrere Düsen (32) innerhalb der Öffnung (4) der Spule (3) angeordnet sind.

36. Reinigungsvorrichtung nach Anspruch 34 oder 35, **dadurch gekennzeichnet, dass** die zumindest eine Düse (32) unterhalb der Öffnung (4) der Spule (3) angeordnet ist.

37. Reinigungsvorrichtung nach einem der Ansprüche 34 bis 36, **dadurch gekennzeichnet, dass** zumindest eine Düse (32) bewegbar angeordnet ist.

38. Reinigungsvorrichtung nach einem der Ansprüche 31 bis 37, **dadurch gekennzeichnet, dass** die Vorrichtung zum Aufbringen der Reinigungsflüssigkeit vorzugsweise über eine Pumpe (31) oder dgl. mit einem Nachfüllbehälter (5) verbunden ist.

39. Reinigungsvorrichtung nach einem der Ansprüche 31 bis 38, **dadurch gekennzeichnet, dass** die Vorrichtung zum Aufbringen der Reinigungsflüssigkeit mit einem Flüssigkeitsanschluss (9) verbunden ist.

40. Reinigungsvorrichtung nach einem der Ansprüche 31 bis 39, **dadurch gekennzeichnet, dass** an der Öffnung (4) der Spule (3) eine Einrichtung zur Erfassung der Eintauchtiefe des Schweißbrenners (11) in die Spule (3) angeordnet ist.

41. Reinigungsvorrichtung nach Anspruch 40, **dadurch gekennzeichnet, dass** die Einrichtung zur Erfassung der Eintauchtiefe durch eine Lichtquelle (13) und einen optischen Sensor (14) gebildet ist, der die von einem am Schweißbrenner (11) entsprechend angeordneten Reflexelemente, vorzugsweise Reflexring (12), reflektierten Lichtstrahlen erfasst.

42. Reinigungsvorrichtung nach einem der Ansprüche 31 bis 41, **dadurch gekennzeichnet, dass** im Gehäuse (1) eine Einrichtung (15) zum Abschneiden eines dem Schweißbrenner (11) zugeführten Schweißdrahtes (16) angeordnet ist.

43. Reinigungsvorrichtung nach Anspruch 42, **dadurch gekennzeichnet, dass** die Abschneideinrichtung (15) unterhalb der Spule (3) angeordnet ist.

44. Reinigungsvorrichtung nach Anspruch 43, **dadurch gekennzeichnet, dass** unterhalb der Spule (3) eine Anschlagplatte (18) angeordnet ist, gegen die der Schweißdraht (16) vorgeschoben wird, zur Einstellung der Länge (L), um welche der Schweißdraht (16) aus dem Schweißbrenner (11) ragt.

45. Reinigungsvorrichtung nach Anspruch 44, **dadurch gekennzeichnet, dass** die Anschlagplatte (18) aus elektrisch leitfähigem Material gebildet ist, so dass der Anschlag des Schweißdrahtes (16) durch den resultierenden elektrischen Kontakt erfassbar ist.

46. Reinigungsvorrichtung nach einem der Ansprüche 31 bis 45, **dadurch gekennzeichnet, dass** eine Einrichtung (24) zur Regelung der Temperatur der Reinigungsflüssigkeit vorgesehen ist.

47. Reinigungsvorrichtung nach einem der Ansprüche 31 bis 46, **dadurch gekennzeichnet, dass** Sensoren zur Detektierung des Schweißbrenners (11) vorgesehen sind.

48. Reinigungsvorrichtung nach einem der Ansprüche 31 bis 47, **dadurch gekennzeichnet, dass** Sensoren (19, 20) zur Erfassung des Füllstands in der Wanne (2) und bzw. oder im Nachfüllbehälter (5) vorgesehen sind..

49. Reinigungsvorrichtung nach einem der Ansprüche 31 bis 48, **dadurch gekennzeichnet, dass** eine Steuereinrichtung (22) zur Steuerung des Reinigungsvorganges vorgesehen ist.

50. Reinigungsvorrichtung nach einem der Ansprüche 31 bis 49, **dadurch gekennzeichnet, dass** eine Schnittstelle (23) zur Verbindung mit einer Steuereinrichtung (22) zur Steuerung des Reinigungsvorganges vorgesehen ist.

51. Reinigungsvorrichtung nach Anspruch 49 oder 50, **dadurch gekennzeichnet, dass** die Steuereinrichtung (22) bzw. die Schnittstelle (23) für die Steuereinrichtung (22) mit der Spule (3) und der Versorgungseinrichtung (7) für die Spule (3) und allfälligen weiteren Komponenten der Reinigungsvorrichtung verbunden ist.

52. Reinigungsvorrichtung nach einem der Ansprüche 31 bis 51, **dadurch gekennzeichnet, dass** die Komponenten der Reinigungsvorrichtung über ein Bussystem (25) miteinander verbunden sind.

## Claims

1. A method for cleaning welding torches, wherein a cleaning or wetting liquid, respectively, is applied to the tip of the welding torch and the tip of the welding torch is subsequently exposed to an electromagnetic field for the contactless removal of foreign substances, **characterised in that** the welding torch is substantially in the same position during the application of the cleaning liquid or wetting liquid, respectively, and the subsequent exposure to an electromagnetic field.

2. A cleaning method according to claim 1, **characterised in that** said cleaning liquid is applied by immersing the tip of the welding torch into the cleaning liquid.

3. A cleaning method according to claim 1, **characterised in that** said cleaning liquid is applied by spraying the tip of the welding torch with said cleaning liquid.

4. A cleaning method according to any one of claims 1 to 3, **characterised in that** the steps of applying cleaning liquid and electromagnetic spatter removal are repeated.

5. A cleaning method according to any one of claims 1 to 4, **characterised in that** the welding torch, for applying said cleaning liquid, is lowered relative to the position assumed during electromagnetic spatter removal.

6. An apparatus for cleaning welding torches (11), including a device for applying cleaning liquid to the tip of a welding torch (11), and a coil (3) having an opening (4) for the insertion of the welding torch (11) to subject said welding torch to electromagnetic cleaning, and a supply device (7) connected with said coil (3), **characterised in that** the device for applying cleaning liquid and the coil (3) are arranged in a common housing (1) together with a waste receptacle (6) arranged below the coil (3) to receive the electromagnetically removed foreign substances.

7. A cleaning apparatus according to claim 6, **characterised in that** the device for applying cleaning liquid is comprised of a tub (2) containing cleaning liquid for the immersion of the welding torch (11).

8. A cleaning apparatus according to claim 6, **characterised in that** the device for applying cleaning liquid is comprised of at least one nozzle (32).

9. A cleaning apparatus according to anyone of claims 6 to 8, **characterised in that** the supply device (7) for the coil (3) is arranged in the housing (1).

10. A cleaning apparatus according to anyone of claims 6 to 9, **characterised in that** the waste receptacle (6) is pivotally arranged.

11. A cleaning apparatus according to anyone of claims 6 to 10, **characterised in that** the waste receptacle (6) is removable from the housing (1).

12. A cleaning apparatus according to anyone of claims 6 to 11, **characterised in that** a refill container (5) connected with the device for applying cleaning liquid is arranged in the housing (1).

13. A cleaning apparatus according to anyone of claims 6 to 11, **characterised in that** a liquid connection (9) connected with the device for applying cleaning liquid is arranged in the housing (1).

14. A cleaning apparatus according to anyone of claims 6 to 13, **characterised in that** the housing (1) comprises wheels (10) or the like.

15. A cleaning apparatus according to anyone of claims 6 to 14, **characterised in that** a device for detecting the immersion depth of the welding torch (11) in the coil (3) is arranged on the opening (4) of the coil (3).

16. A cleaning apparatus according to claim 15, **characterised in that** the device for detecting the immersion depth is comprised of a light source (13) and an optical sensor (14) detecting the light rays reflected by a reflex element, preferably a reflex ring (12), appropriately arranged on the welding torch (11).

17. A cleaning apparatus according to anyone of claims 6 to 16, **characterised in that** a device (15) for cutting a welding wire (16) fed to the welding torch (11) is arranged in the housing (1) .

18. A cleaning apparatus according to claim 17, **characterised in that** the cutting device (15) is arranged below the coil (3).

19. A cleaning apparatus according to claim 18, **characterised in that** a stop plate (18) is arranged below the coil (3), against which the welding wire (16) is advanced in order to adjust the length (L) by which the welding wire (16) projects out of the welding torch (11).

20. A cleaning apparatus according to claim 19, **characterised in that** the stop plate (18) is made of an electrically conductive material such that the impact of the welding wire (16) is detectable by the resulting electrical contact.

21. A cleaning apparatus according to any one of claims 6 to 20, **characterised in that** a device for controlling the temperature of the cleaning liquid is provided.

22. A cleaning apparatus according to any one of claims 6 to 21, **characterised in that** sensors (19, 20) are provided for detecting the welding torch (11).

23. A cleaning apparatus according to any one of claims 6 to 22, **characterised in that** sensors (19, 20) are provided for detecting the filling level in the tub (2) and/or in the refill container (5).

24. A cleaning apparatus according to any one of claims 6 to 23, **characterised in that** a control device (22) for controlling the cleaning procedure is arranged in the housing (1).

25. A cleaning apparatus according to any one of claims 6 to 24, **characterised in that** an interface (23) for connection to a control device (22) for controlling the cleaning procedure is arranged on the housing (1).

26. A cleaning apparatus according to claim 24 or 25, **characterised in that** said control device (22) or the interface (23) for the control device (22), respectively, is connected with the coil (3) and the supply device (7) for the coil (3) and the optional device for detecting the immersion depth of the welding torch (11) and the optional cutting device (15) and the optional temperature control device (24) and optional sensors (19, 20, 21).

27. A cleaning apparatus according to any one of claims 6 to 26, **characterised in that** the components provided in the housing (1) are interconnected by a bus system (25).

28. A cleaning apparatus according to any one of claims 6 to 27, **characterised in that** at least one display (27) is arranged on the housing (1).

29. A cleaning apparatus according to any one of claims 6 to 28, **characterised in that** a free space (28) is provided below or within the housing (1), particularly for storing refill containers (5).

30. A cleaning apparatus according to claim 29, **characterised in that** at least one refill container (5) arranged in the free space (28) is connected via a pump or the like with the device for applying cleaning liquid.

31. An apparatus for cleaning welding torches (11), including a device for applying cleaning liquid to the tip of a welding torch (11), and a coil (3) having an opening (4) for the insertion of the welding torch (11) to subject said welding torch to electromagnetic cleaning, and a supply device (7) connected with said coil (3), **characterised in that** the device for applying cleaning liquid is arranged within or below the opening (4) of the coil (3) so as to enable the application of cleaning liquid and said electromagnetic cleaning substantially in the same position of the welding torch (11).

32. A cleaning apparatus according to claim 31, **characterised in that** the device for applying cleaning liquid is comprised of a tub (2) containing cleaning liquid.

33. A cleaning apparatus according to claim 32, **characterised in that** the tub (2) is connected with a device (29) for, preferably vertical, movement.

34. A cleaning apparatus according to any one of claims 31 to 33, **characterised in that** the device for applying cleaning liquid is comprised of at least one nozzle (32).

35. A cleaning apparatus according to claim 34, **characterised in that** several nozzles (32) are arranged within the opening (4) of the coil (3).

36. A cleaning apparatus according to claim 34 or 35, **characterised in that** the at least one nozzle (32) is arranged below the opening (4) of the coil (3).

37. A cleaning apparatus according to any one of claims 34 to 36, **characterised in that** at least one nozzle (32) is movably arranged.

38. A cleaning apparatus according to any one of claims 31 to 37, **characterised in that** the device for applying cleaning liquid is connected with a refill container (5), preferably via a pump (31) or the like.

39. A cleaning apparatus according to any one of claims 31 to 38, **characterised in that** the device for applying cleaning liquid is connected with a liquid connection (9).

40. A cleaning apparatus according to any one of claims 31 to 39, **characterised in that** a device for detecting the immersion depth of the welding torch (11) in the coil (3) is arranged on the opening (4) of the coil (3).

41. A cleaning apparatus according to claim 40, **characterised in that** the device for detecting the immersion depth is comprised of a light source (13) and an optical sensor (14) detecting the light rays reflected by a reflex element, preferably a reflex ring (12), appropriately arranged on the welding torch (11).

42. A cleaning apparatus according to anyone of claims 31 to 41, **characterised in that** a device (15) for cutting a welding wire (16) fed to the welding torch (11) is arranged in the housing (1) .

43. A cleaning apparatus according to claim 42, **characterised in that** the cutting device (15) is arranged below the coil (3).

44. A cleaning apparatus according to claim 43, **characterised in that** a stop plate (18) is arranged below the coil (3), against which the welding wire (16) is advanced in order to adjust the length (L) by which the welding wire (16) projects out of the welding torch (11).

45. A cleaning apparatus according to claim 44, **characterised in that** the stop plate (18) is made of an electrically conductive material such that the impact of the welding wire (16) is detectable by the resulting electrical contact.

46. A cleaning apparatus according to any one of claims 31 to 45, **characterised in that** a device (24) for controlling the temperature of the cleaning liquid is provided.

47. A cleaning apparatus according to any one of claims 31 to 46, **characterised in that** sensors are provided for detecting the welding torch (11).

48. A cleaning apparatus according to any one of claims 31 to 47, **characterised in that** sensors (19, 20) are provided for detecting the filling level in the tub (2) and/or in the refill container (5).

49. A cleaning apparatus according to any one of claims 31 to 48, **characterised in that** a control device (22) for controlling the cleaning procedure is provided.

50. A cleaning apparatus according to any one of claims 31 to 49, **characterised in that** an interface (23) for connection to a control device (22) for controlling the cleaning procedure is provided.

51. A cleaning apparatus according to claim 49 or 50, **characterised in that** said control device (22) or the interface (23) for the control device (22), respectively, is connected with the coil (3) and the supply device (7) for the coil (3) and optionally provided further components of the cleaning apparatus.

52. A cleaning apparatus according to any one of claims 31 to 51, **characterised in that** the components of the cleaning apparatus are interconnected by a bus system (25).

## Revendications

1. Procédé pour nettoyer des chalumeaux de soudage, un liquide de nettoyage ou liquide de mouillage étant appliqué sur la pointe du chalumeau puis la pointe du chalumeau étant soumise à un champ électromagnétique pour l'élimination sans contact des impuretés, **caractérisé en ce que** le chalumeau se trouve sensiblement dans la même position pendant l'application du liquide de nettoyage ou liquide de mouillage et l'exposition suivante à un champ électromagnétique.

2. Procédé de nettoyage selon la revendication 1, **caractérisé en ce que** le liquide de nettoyage est appliqué par immersion de la pointe du chalumeau dans le liquide de nettoyage.

3. Procédé de nettoyage selon la revendication 1, **caractérisé en ce que** le liquide de nettoyage est appliqué par pulvérisation du liquide de nettoyage sur la pointe du chalumeau.

4. Procédé de nettoyage selon l'une des revendications 1 à 3, **caractérisé en ce que** les étapes de l'application du liquide de nettoyage et du nettoyage électromagnétique sont renouvelées.

5. Procédé de nettoyage selon l'une des revendications 1 à 4, **caractérisé en ce que** le chalumeau est abaissé pour l'application du liquide de nettoyage par rapport à la position pendant le nettoyage électromagnétique.

6. Dispositif pour nettoyer des chalumeaux de soudage (11) comportant un dispositif d'application d'un liquide de nettoyage sur la pointe du chalumeau (11) ainsi qu'une bobine (3) avec une ouverture (4) pour l'introduction du chalumeau (11) en vue du nettoyage électromagnétique de celui-ci, et comportant un dispositif d'alimentation (7) relié à la bobine (3), **caractérisé en ce que** le dispositif d'application du liquide de nettoyage et la bobine (3) sont disposés dans un boîtier (1) commun avec un récipient à déchets (6), disposé sous la bobine (3), destiné à recevoir les impuretés nettoyées de manière électromagnétique.

7. Dispositif de nettoyage selon la revendication 6, **caractérisé en ce que** le dispositif d'application du liquide de nettoyage est formé par un bac (2) avec liquide de nettoyage pour l'immersion du chalumeau (11).

8. Dispositif de nettoyage selon la revendication 6, **caractérisé en ce que** le dispositif d'application du liquide de nettoyage est formé par au moins une buse (32).

9. Dispositif de nettoyage selon l'une des revendications 6 à 8, **caractérisé en ce que** le dispositif d'alimentation (7) pour la bobine (3) est disposé dans le boîtier (1).

10. Dispositif de nettoyage selon l'une des revendications 6 à 9, **caractérisé en ce que** le récipient à déchets (8) est disposé de manière à pouvoir pivoter.

11. Dispositif de nettoyage selon l'une des revendications 6 à 10, **caractérisé en ce que** le récipient à déchets (6) peut être retiré du boîtier (1).

12. Dispositif de nettoyage selon l'une des revendications 6 à 11, **caractérisé en ce que** dans le boîtier (1) est disposé un récipient de remise à niveau (5) relié au dispositif d'application du liquide de nettoyage.

13. Dispositif de nettoyage selon l'une des revendications 6 à 11, **caractérisé en ce que** dans le boîtier (1) est disposé un raccord de liquide (9) relié au dispositif d'application du liquide de nettoyage.

14. Dispositif de nettoyage selon l'une des revendications 6 à 13, **caractérisé en ce que** le boîtier (1) contient des roues (10) ou similaires.

15. Dispositif de nettoyage selon l'une des revendications 6 à 14, **caractérisé en ce qu'**au droit de l'ouverture (4) de la bobine (3) est disposé un dispositif pour relever la profondeur d'immersion du chalumeau (11) dans la bobine (3).

16. Dispositif de nettoyage selon la revendication 15, **caractérisé en ce que** le dispositif pour relever la profondeur d'immersion est formé par une source de lumière (13) et un capteur optique (14) qui détecte les rayons lumineux réfléchis par un élément réfléchissant, de préférence un anneau réfléchissant (12), convenablement disposé sur le chalumeau (11).

17. Dispositif de nettoyage selon l'une des revendications 6 à 16, **caractérisé en ce que** dans le boîtier (1) est disposé un dispositif (15) pour couper un fil de soudage (16) amené au chalumeau (11).

18. Dispositif de nettoyage selon la revendication 17, **caractérisé en ce que** le dispositif de coupe (15) est disposé sous la bobine (3).

19. Dispositif de nettoyage selon la revendication 18, **caractérisé en ce qu'**au-dessous de la bobine (3) est disposée une plaque de butée (18) contre laquelle est poussé le fil de soudage (16), pour régler la longueur (L) de laquelle le fil de soudage (16) ressort du chalumeau (11).

20. Dispositif de nettoyage selon la revendication 19, **caractérisé en ce que** la plaque de butée (18) est constituée d'un matériau électriquement conducteur, ce qui fait que la butée du fil de soudage (16) peut être détectée par le contact électrique qui en résulte.

21. Dispositif de nettoyage selon l'une des revendications 6 à 20, **caractérisé en ce qu'**il est prévu un dispositif pour la régulation de la température du liquide de nettoyage.

22. Dispositif de nettoyage selon l'une des revendications 6 à 21, **caractérisé en ce que** des capteurs (19, 20) sont prévus pour détecter le chalumeau (11).

23. Dispositif de nettoyage selon l'une des revendications 6 à 22, **caractérisé en ce que** des capteurs (19, 20) sont prévus pour détecter le niveau de remplissage du bac (2) et/ou du récipient de remise à niveau (5).

24. Dispositif de nettoyage selon l'une des revendications 6 à 23, **caractérisé en ce qu'**un dispositif de commande (22) est disposé dans le boîtier (1) pour commander le processus de nettoyage.

25. Dispositif de nettoyage selon l'une des revendications 6 à 24, **caractérisé en ce qu'**une interface (23) est disposée sur le boîtier (1) pour la liaison avec un dispositif de commande (22) commandant le processus de nettoyage.

26. Dispositif de nettoyage selon la revendication 24 ou 25, **caractérisé en ce que** le dispositif de commande (22) ou l'interface (23) pour le dispositif de commande (22) est relié à la bobine (3) et au dispositif d'alimentation (7) de la bobine (3), et à l'éventuel dispositif de détection de la profondeur d'immersion du chalumeau (1) et à l'éventuel dispositif de coupe (15) et à l'éventuel dispositif de régulation de la température (24) et aux éventuels capteurs (19, 20, 21).

27. Dispositif de nettoyage selon l'une des revendications 6 à 26, **caractérisé en ce que** les composants sont reliés entre eux dans le boîtier (1) par un système de bus (25).

28. Dispositif de nettoyage selon l'une des revendications 6 à 27, **caractérisé en ce que** sur le boîtier (1) est disposé au moins un affichage (27).

29. Dispositif de nettoyage selon l'une des revendications 6 à 28, **caractérisé en ce qu'**au-dessous ou à l'intérieur du boîtier (1) est prévu un espace libre (28), en particulier pour y placer des récipients de remise à niveau (5).

30. Dispositif de nettoyage selon la revendication 29, **caractérisé en ce qu'**au moins un récipient de remise à niveau (5), disposé dans l'espace libre (28), est relié, par une pompe ou similaire, au dispositif d'application du liquide de nettoyage.

31. Dispositif de nettoyage du chalumeau (11) comportant un dispositif pour l'application d'un liquide de nettoyage sur la pointe du chalumeau (11) ainsi qu'une bobine (3) avec une ouverture (4) pour l'introduction du chalumeau (11), en vue du nettoyage électromagnétique de celui-ci et comportant un dispositif d'alimentation (7) relié à la bobine (3), **caractérisé en ce que** le dispositif d'application du liquide de nettoyage est disposé à l'intérieur ou au-dessous de l'ouverture (4) de la bobine (3), ce qui fait que l'application du liquide de nettoyage et le nettoyage électromagnétique peuvent s'effectuer sensiblement dans la même position du chalumeau (11).

32. Dispositif de nettoyage selon la revendication 31, **caractérisé en ce que** le dispositif d'application du liquide de nettoyage est formé par un bac (2) avec liquide de nettoyage.

33. Dispositif de nettoyage selon la revendication 32, **caractérisé en ce que** le bac (2) est relié à un dispositif (29) pour le déplacement de préférence vertical.

34. Dispositif de nettoyage selon l'une des revendications 31 à 33, **caractérisé en ce que** le dispositif d'application du liquide de nettoyage est formé par au moins une buse (32).

35. Dispositif de nettoyage selon la revendication 34, **caractérisé en ce que** plusieurs buses (32) sont disposées à l'intérieur de l'ouverture (4) de la bobine (3).

36. Dispositif de nettoyage selon la revendication 34 ou 35, **caractérisé en ce que** la au moins une buse (32) est disposée au-dessous de l'ouverture (4) de la bobine (3).

37. Dispositif de nettoyage selon l'une des revendications 34 à 36, **caractérisé en ce qu'**au moins une buse (32) est disposée déplaçable.

38. Dispositif de nettoyage selon l'une des revendications 31 à 37, **caractérisé en ce que** le dispositif d'application du liquide de nettoyage est relié, de préférence par une pompe (31) ou similaire, à un récipient de remise à niveau (5).

39. Dispositif de nettoyage selon l'une des revendications 31 à 38, **caractérisé en ce que** le dispositif d'application du liquide de nettoyage est relié à un raccord de liquide (9).

40. Dispositif de nettoyage selon l'une des revendications 31 à 39, **caractérisé en ce qu'**au droit de l'ouverture (4) de la bobine (3) est disposé un dispositif pour détecter la profondeur d'immersion du chalumeau (11) dans la bobine (3).

41. Dispositif de nettoyage selon la revendication 40, **caractérisé en ce que** le dispositif de détection de la profondeur d'immersion est formé par une source de lumière (13) et un capteur optique (14) qui détecte les rayons lumineux réfléchis par des éléments réfléchissants, de préférence un anneau réfléchissant (12), convenablement disposé sur le chalumeau (11).

42. Dispositif de nettoyage selon l'une des revendications 31 à 41, **caractérisé en ce que** dans le boîtier (1) est disposé un dispositif (15) pour couper un fil de soudage (16) amené au chalumeau (11).

43. Dispositif de nettoyage selon la revendication 42, **caractérisé en ce que** le dispositif de coupe (15) est disposé sous la bobine (3).

44. Dispositif de nettoyage selon la revendication 43, **caractérisé en ce qu'**au-dessous de la bobine (3) est disposée une plaque de butée (18) contre laquelle est poussé le fil de soudage (16), pour régler la longueur (L) de laquelle le fil de soudage (16) ressort du chalumeau (11) .

45. Dispositif de nettoyage selon la revendication 44, **caractérisé en ce que** la plaque de butée (18) est constituée d'un matériau électriquement conducteur, ce qui fait que la butée du fil de soudage (16) peut être détectée par le contact électrique qui en résulte.

46. Dispositif de nettoyage selon l'une des revendications 31 à 45, **caractérisé en ce qu'**il est prévu un dispositif (24) pour la régulation de la température du liquide de nettoyage.

47. Dispositif de nettoyage selon l'une des revendications 31 à 46, **caractérisé en ce que** des capteurs sont prévus pour détecter le chalumeau (11).

48. Dispositif de nettoyage selon l'une des revendications 31 à 47, **caractérisé en ce que** des capteurs (19, 20) sont prévus pour détecter le niveau de remplissage du bac (2) et/ou du récipient de remise à niveau (5).

49. Dispositif de nettoyage selon l'une des revendications 31 à 48, **caractérisé en ce qu'**un dispositif de commande (22) est prévu dans le boîtier (1) pour commander le processus de nettoyage.

50. Dispositif de nettoyage selon l'une des revendications 31 à 49, **caractérisé en ce qu'**une interface (23) est prévue sur le boîtier (1) pour la liaison avec un dispositif de commande (22) commandant le processus de nettoyage.

51. Dispositif de nettoyage selon la revendication 49 ou 50, **caractérisé en ce que** le dispositif de commande (22) ou l'interface (23) pour le dispositif de commande (22) est relié à la bobine (3) et au dispositif d'alimentation (7) de la bobine (3) et à d'éventuels composants supplémentaires du dispositif de nettoyage.

52. Dispositif de nettoyage selon l'une des revendications 31 à 51, **caractérisé en ce que** les composants du dispositif de nettoyage sont reliés entre eux dans le boîtier (1) par un système de bus (25).
